# FASCICULE DE BREVET EUROPEEN

(11) **EP 0 637 417 B1**
(45) Date de publication et mention de la délivrance du brevet: **05.01.2000**
(21) Numéro de dépôt: 94905162.7
(22) Date de dépôt: 26.01.1994
(51) Int. Cl.: H04L 12/56, H04L 12/28

(54) **INSTALLATION DE TRANSMISSION DE DONNEES, DU TYPE RESEAU RADIO, ET PROCEDE CORRESPONDANT**
DATENÜBERTRAGUNGSEINRICHTUNG UND VERFAHREN FÜR FUNKNETZ
RADIO NETWORK-TYPE DATA TRANSMISSION METHOD AND FACILITY

(30) Priorité: 26.01.1993 FR 9300750
(43) Date de publication de la demande: 08.02.1995
(73) Titulaire: INRIA INSTITUT NATIONAL DE RECHERCHE EN INFORMATIQUE ET EN AUTOMATIQUE, Rocquencourt F-78153 Le Chesnay (FR)
(72) Inventeur: JACQUET, Philippe, F-78530 Buc (FR); MUHLETHALER, Paul, F-78600 Maisons Laffite (FR)
(74) Mandataire: Plaçais, Jean-Yves
(86) Numéro de dépôt international: FR9400097
(87) Numéro de publication internationale: WO9417616

(56) Documents cités:
- EP-A- 0 222 308
- EP-A- 0 263 421
- WO-A-86/04755
- WO-A-89/11126
- WO-A-91/05416
- US-A- 4 665 519
- US-A- 5 040 175
- 40TH IEEE VEHICULAR TECHNOLOGY CONFERENCE 6 Mai 1990 , ORLANDO, US pages 366 - 371 XP204141 Y. YAMAUCHI 'Reliable multicast over the mobile packet radio channel'

## Description

L'invention concerne les réseaux informatiques opérant par radio, c'est à dire ayant pour milieu de communication l'éther, en particulier ceux qui fonctionnent en mode paquet.

On connaît d'après le document EP-A-0 222 308, une installation de transmission de données comportant des stations maîtres présentant des fonctions de détection de porteuses pour tenter d'éviter les problèmes de collision de signaux. Ces fonctions reposent sur l'utilisation d'une unique fréquence de porteuse commune.

Par ailleurs, le Demandeur a fait de premières propositions générales dans sa demande de brevet français N° 92 04 032 (FR-A-2 689 658 ; WO-93/20636). Il a proposé certains perfectionnements, dans une demande de brevet français ultérieure N° 93 00 750, qui, en conformité d'une disposition nouvelle de la loi française, pouvait permettre à la seconde demande (93 00 750) de bénéficier de la date de dépôt de la première (92 04 032), pour les parties communes. La présente demande concerne les éléments nouveaux de la demande N° 93 00 750, repris sous forme synthétique.

L'installation de transmission de données proposée est du type comprenant au moins deux postes de traitement de données (le mot "traitement" étant pris à son sens le plus élémentaire). Chaque poste est muni d'une interface-réseau, capable de transmettre des messages sur requête, et de recueillir des messages reçus. Ceci comprend un dispositif de gestion d'émission-réception. Sont également prévus un moyen de test pour reconnaître une condition de collision ("détecteur de collision") ainsi qu'un moyen de résolution de collision, consécutivement à une condition de collision reconnue. Une des fonctions essentielles de ce dispositif de gestion est de donner des ordres confirmatifs d'émission ou de réception à l'interface-réseau.

Selon la demande antérieure FR 92 04 032, chacun des postes comporte un dispositif d'émission-réception radio pluridirectionnel (intéressant plusieurs directions, mais non nécessairement omnidirectionnels). Dans ses modes de réalisation décrits en détail, il est prévu notamment que ce dispositif d'émission-réception radio opère sur un canal central, ainsi que sur un ou plusieurs canaux latéraux.

Il s'est avéré que ces premières propositions pouvaient présenter des inconvénients, notamment en raison de l'encombrement de l'éther.

La présente demande a pour but d'apporter une solution à ce problème.

L'invention part d'un réseau où l'on prévoit au moins deux postes de traitement de données, munis chacun d'une interface-réseau. Ces postes sont capables de coopérer par radio dans une bande de fréquences choisie, ou canal de données, pour émettre des messages sur requête, et pour recueillir des messages reçus. Les postes vont à cet effet établir des ordres confirmatifs d'émission ou de réception.

Selon une caractéristique de l'invention, en réponse à un ordre confirmatif d'émission d'un message dans un poste, il est effectué dans ladite bande de fréquences (utilisée pour les données) une émission/réception rapidement alternée, selon un motif choisi propre à ce poste. Une collision est reconnue si un signal de niveau supérieur à un premier seuil de niveau est reçu pendant une partie substantielle d'au moins un silence de cette émission/réception rapide alternée, manifestant l'émission concomitante d'un autre poste.

En termes matériels, chacun des postes comporte un dispositif d'émission-réception radio opérant dans une bande de fréquences choisie, où il est capable de commutation émission/réception rapide. En réponse à un ordre confirmatif d'émission d'un message ou d'un paquet, ledit dispositif opère en émission/réception rapidement alternée, selon un motif choisi pour être propre à ce dispositif d'émission/réception. Une collision est reconnue par un moyen détecteur de collision, si un signal de niveau supérieur à un premier seuil de niveau est reçu durant une partie substantielle d'au moins un silence de cette émission/réception rapide alternée, manifestant l'émission concomitante d'un autre poste.

En présence d'une collision reconnue, si des données du message ont été déjà transmises, leur transmission peut être invalidée; on s'abstient, s'il y a lieu, de transmettre le reste du message ou du paquet; et une procédure de traitement de collision est éventuellement entreprise, notamment si une résolution de collision est nécessaire.

En l'absence de collision reconnue, l'émission d'une partie au moins du reste éventuel du message (ou du paquet) peut être réalisée dans ladite bande de fréquences choisie.

D'autres caractéristiques et avantages de l'invention apparaîtront à l'examen de la description détaillée ci-après, et des dessins annexés, sur lesquels :
- la figure 1 est un schéma très simplifié d'un réseau informatique classique où le milieu de transmission est filaire;
- la figure 2 est un schéma très simplifié illustrant quatre stations interconnectées par une transmission radio;
- la figure 3 est le schéma de principe de l'ensemble de l'interface-réseau, pour un poste selon l'invention;
- la figure 4 illustre le format des trames;
- la figure 5 est un schéma fonctionnel d'un mécanisme applicable à la détection de collisions;
- la figure 6 est un schéma fonctionnel plus détaillé d'une partie de la figure 5, tandis que la figure 6A est un schéma électrique équivalent correspondant à la figure 6;
- les figures 7, 8 et 9 sont d'autres schémas fonctionnels plus détaillés, relatifs à des parties du mécanisme de la figure 5; et
- la figure 10 est un schéma électrique équivalent des opérations d'un automate détecteur de collisions.

Les dessins annexés sont, pour l'essentiel, de caractère certain. En conséquence, ils font partie intégrante de la description et pourront non seulement servir à compléter celle-ci, mais aussi contribuer à la définition de l'invention le cas échéant.

Le Demandeur a déposé le 2 avril 1992 une autre demande de brevet N° 92 04 033 (FR-A-2 689 713), intitulée "Dispositif de transmission de données pour réseau à accès aléatoire, avec résolution de collision perfectionnée, et procédé correspondant"; elle présente des relations techniques avec la présente Demande.

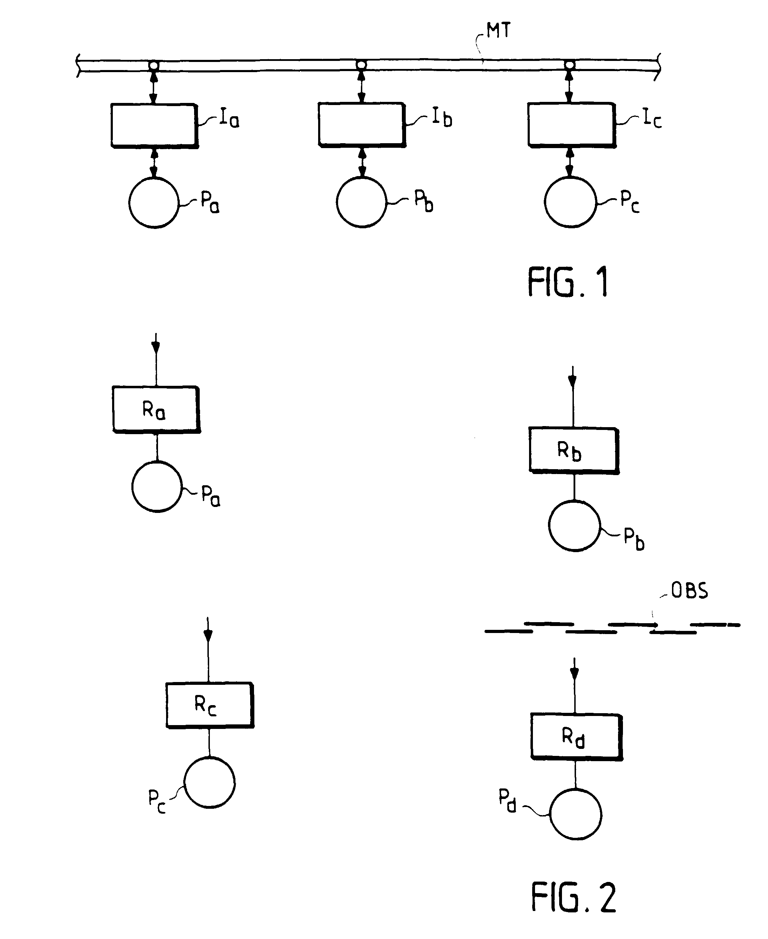

Sur la figure 1, un milieu de transmission MT est relié à des interfaces-réseaux Ia à Ic, respectivement connectés à des postes Pa à Pc. C'est là la structure classique d'un réseau informatique de transmission de données, auquel peut s'appliquer un protocole CSMA/CD (dont la norme IEEE 802.3 donne un exemple pour le câble).

Les postes tels que Pa sont des postes de traitement de données (le mot traitement est utilisé ici au sens le plus élémentaire, ce traitement pouvant être très simple). Tous les traitements effectués dans le poste sont extérieurs à la transmission de données proprement dite. Mais il pourra exister dans le poste des opérations spécifiques tenant compte spécifiquement de la nature et de certaines conditions applicables à la transmission de données ("couches supérieures" du protocole de transmission).

Sur la figure 2, les postes ou stations Pa à Pd sont maintenant reliées à des dispositifs radio Ra à Rd, munis d'antennes. Dans l'exemple simplifié illustré, toutes les stations peuvent échanger directement des données, sauf les stations Rb et Rd, entre lesquelles existe un obstacle OBS.

Ce que l'on appelle ici interface-réseau, dans une acception plus large que pour les réseaux informatiques à câble, c'est tout ce qui se trouve entre le poste proprement dit et la ou les antennes qu'il comporte.

Bien que l'invention puisse servir à la transmission de "messages" (un ensemble de données à transmettre, de taille quelconque), son application se fait préférentiellement sur la base de "trames" ou "paquets", ces mots désignant l'unité élémentaire de transmission de données, c'est à dire le bloc de données que l'on peut transmettre ensemble.

L'une des particularités de la présente invention est de faire en sorte que lorsqu'un poste désire émettre une trame, ce poste soit le seul à le faire dans son domaine de portée radio.

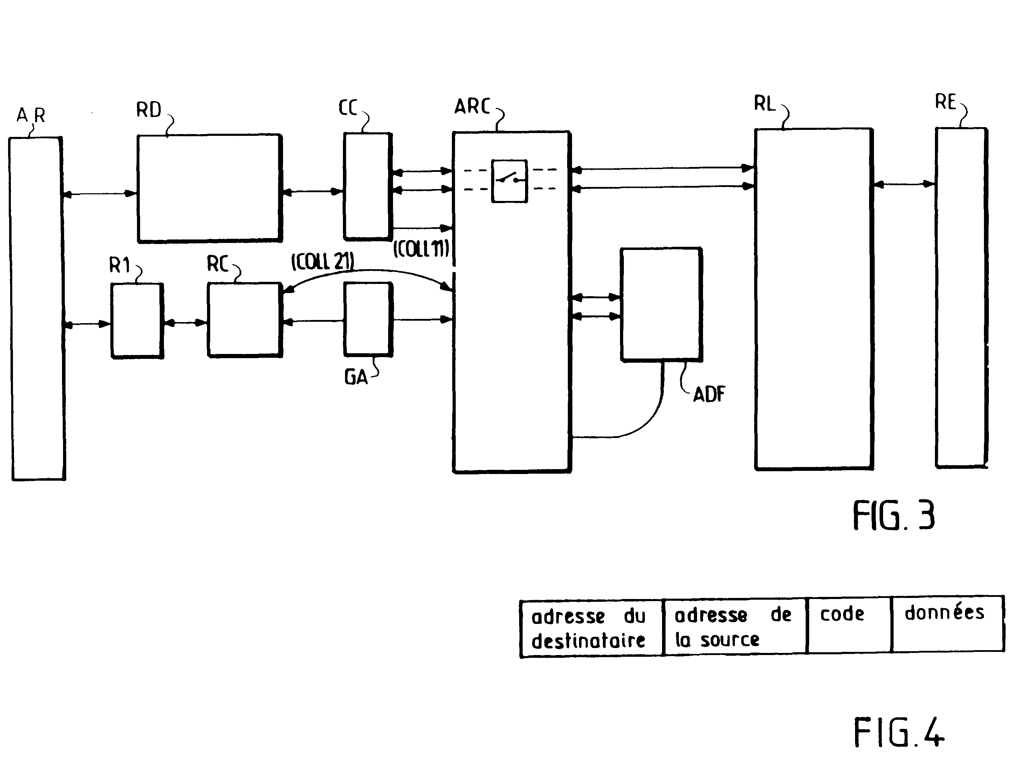

Il est maintenant fait référence à la figure 3, qui illustre la structure générale d'une interface-réseau pour un poste. La demande antérieure FR-A-2 689 658 distinguait entre un canal central et un ou plusieurs canaux latéraux. Ici, un seul canal est utilisé (ce qui est illustré par une seule antenne AR sur la figure 3).

De droite à gauche:
- un bloc RE désigne le raccordement normalisé à la norme IEEE 802, qui permet la liaison avec une sortie réseau d'un ordinateur. Ce raccordement est par exemple réalisé avec le circuit intégré i82586 vendu par INTEL Corporation.
- un bloc RL est un "routeur local" dont le rôle est précisé dans la demande FR-A-2 689 658. Il a pour fonction générale d'établir des paquets à transmettre, avec des requêtes de transmission, ainsi que de recueillir les paquets convenablement reçus, et éventuellement de les re-diriger.
- un bloc ARC est l'unité de gestion d'émission-réception, en fonction notamment des collisions. Il peut lui être adjoint un bloc ADF, capable de faire émettre des paquets formant messages artificiels, lorsque cela est nécessaire, par exemple pour corriger des dérives en fréquence ou encore pour échanger des informations topologiques utiles au routage.
- une antenne d'émission-réception radio AR est reliée à un ensemble émetteur-récepteur radio.

Cet ensemble comprend:
- un bloc GA qui opère en tant que générateur de codes pseudo-aléatoires. De tels codes sont utilisés ici à différentes fins (pas seulement pour l'émission/réception);
- un circuit ou bloc RC, coopérant avec un étage émetteur/récepteur à commutation rapide R1, en vue de détecter des collisions en émission;
- un bloc noté RD, pour l'émission/réception des données (trame ou paquet). Il lui est associé un circuit CC qui a pour fonction, à l'émission, d'agrémenter le paquet de codes correcteurs, et à la réception, de vérifier la correction de ces codes pour détecter d'éventuelles erreurs à l'intérieur d'un paquet (reçu par ailleurs normalement).

Le format des paquets peut être le format classique ETHERNET conforme à la norme IEEE 802.3 (figure 4), éventuellement complété comme décrit dans la demande FR-A-2 689 658. Les modes de codage pour l'émission/réception et pour la détection d'erreurs peuvent être ceux décrits dans FR-A-2 689 658.

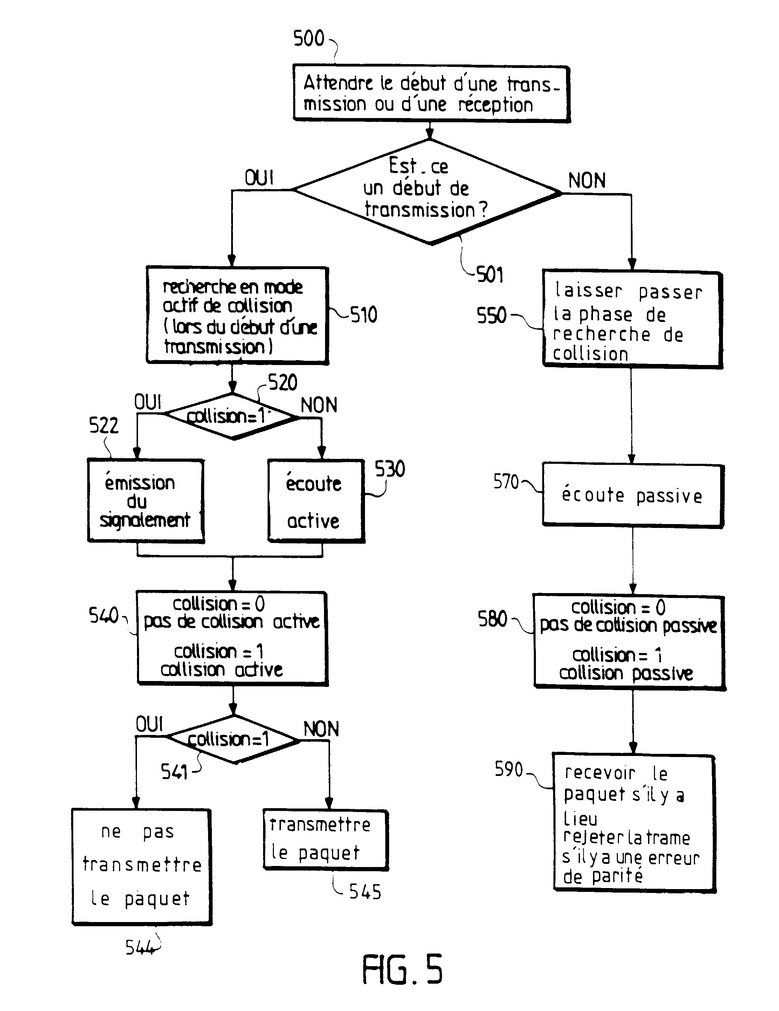

La figure 5 illustre la mise en oeuvre de l'invention.

Sur la figure 5, l'étape 500 marque l'attente du début d'une transmission (émission) ou d'une réception.

Sur un tel début, l'étape 501 teste s'il s'agit d'une émission ou d'une réception.

On considère d'abord le cas d'un poste en début d'émission.

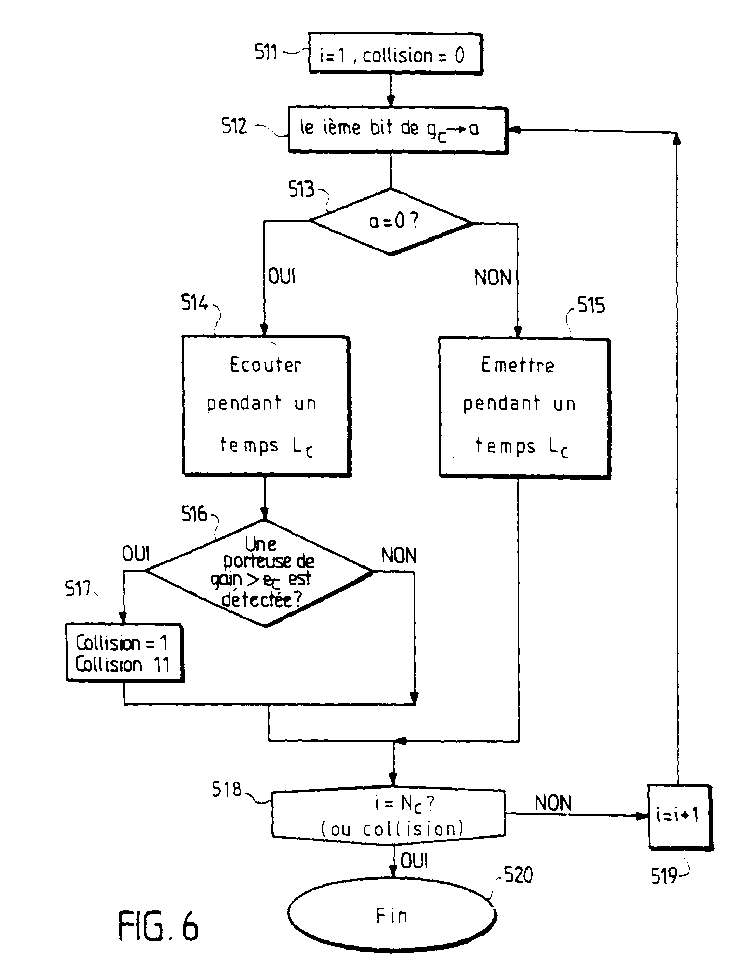

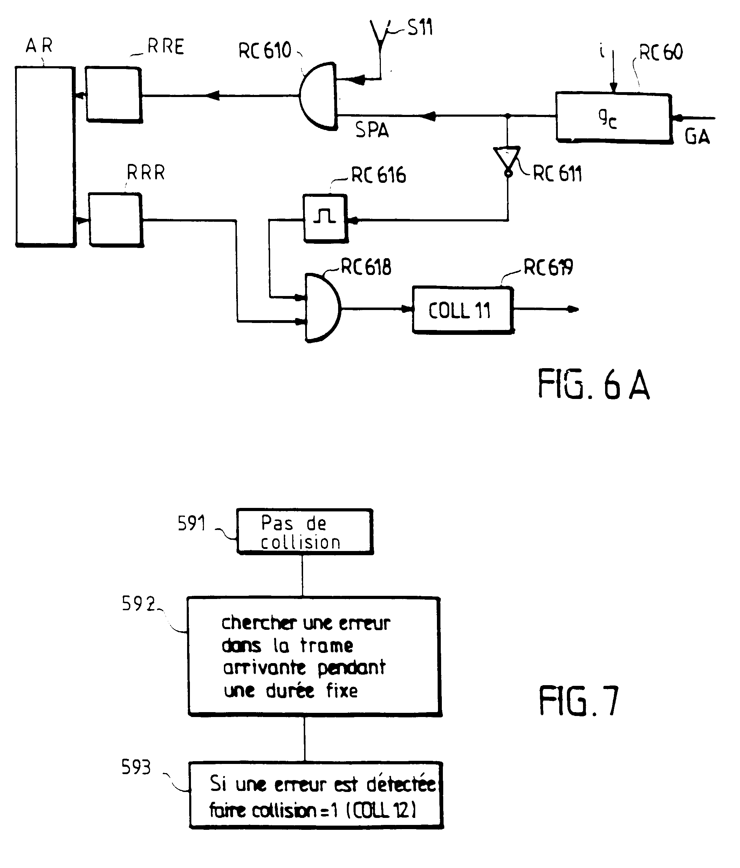

Avant chaque transmission de paquet, dès que le canal de données est reconnu libre (500), ce poste qui veut émettre (501, OUI) insère directement sur le canal l'étape 510 de détection de collision illustrée sur la figure 5, et détaillée sur la figure 6.

Le générateur pseudo-aléatoire GA (figure 3) a fourni un mot pseudo-aléatoire gc possédant Nc bits.

A l'étape 511 (figure 6), on initialise à 1 un indice de traitement i, tandis que la variable COLL11 est mise à la valeur 0, représentative de collision "fausse".

L'étape 512 consiste à prélever dans le mot g_{c} son ième bit, que l'on va désigner par a.

L'étape 513 teste si le bit a vaut 0 ou 1. S'il vaut 1, l'étape 515 consiste à émettre sur le premier canal latéral pendant un temps L_{c}. S'il vaut 0, on va au contraire à l'étape 514 écouter sur le premier canal latéral pendant le temps L_{c}.

A l'étape 516, on teste si une porteuse de gain supérieure à une valeur de seuil e_{c} a été détectée ("émission tierce"). Si oui, c'est qu'une autre station a émis en même temps (sur la base d'un mot pseudo-aléatoire différent). Dans ce cas, l'étape 517 consiste à faire passer à 1 la variable COLL11. Avantageusement la détection de porteuse de l'étape 516 ne s'effectue pas immédiatement dès le début de l'intervalle de temps d'écoute défini à l'étape 514. On attend de préférence un temps l_{c}, de sorte que le détecteur de collisions ne puisse pas être abusé par l'écho de ses propres émissions. Par ailleurs, il est fait en sorte que l'émission de l'étape 515 apparaisse de façon continue, lorsque deux bits consécutifs du mot pseudo-aléatoire g_{c} sont à un.

Ensuite (test 518), si l'on est arrivé au dernier bit du mot pseudo-aléatoire GC, (ou bien si une émission tierce a été constatée), la sortie finale consiste à retourner à l'étape 520 de la figure 5. Sinon, l'étape 519 incrémente l'indice de travail i, et l'on retourne en 512.

En pratique, le bloc GA n'est pas nécessairement un générateur pseudo-aléatoire. En effet, le mot binaire gc peut rester le même pendant une assez longue période. Par ailleurs, il n'est pas nécessairement complètement aléatoire. Il peut se composer par exemple d'un préfixe choisi, suivi d'une partie aléatoire. Le préfixe peut être géré indépendamment, notamment par les fonctions de niveau supérieur du réseau, par exemple pour définir des priorités. A la limite, le caractère purement aléatoire peut être supprimé, pourvu que le préfixe soit choisi pour permettre de distinguer les différents émetteurs.

Matériellement (Figure 6A), les émetteurs/récepteurs RD et R1 de la figure 3 sont ici regroupés, et décomposés en une partie émission RRE et une partie réception RRR. Le bloc GA a construit un mot pseudo-aléatoire g_{c}. Ce mot peut être stocké dans un registre RC60, recevant des impulsions d'horloge qui définissent l'indice de traitement i.

Au début d'une émission, le signal S11 est vrai. La porte ET RC610 est donc validée. Elle reçoit par ailleurs le bit courant en sortie du registre RC60. Si le bit vaut 1, l'émetteur RRE est excité. Si le bit vaut 0, son complément établi par l'inverseur RC611 excite un retard défini par un étage RC616, après quoi une porte ET RC618 est validée pour surveiller la sortie du récepteur RRR. Si on obtient une émission pendant que le bit courant du mot gc est à 0, et après le retard l_{c} déjà mentionné, la sortie COLL11 de la porte RC618 passe à vrai, et COLL11 = 1 est stocké en mémoire RC619.

En 520 (Figure 5), on constate un eventuel état de collision, à partir du signal logique COLL11 (valeurs: 0 = faux; 1 = vrai).

En quelque sorte, chaque station définit donc un peigne (irrégulier) d'émission/réception qui lui est propre. L_{c} est l'horloge utilisée pour définir ce peigne. L_{c} doit être choisi supérieur au temps pendant lequel on reçoit des échos après émission (trajets multiples et/ou fading). J_{c} est un temps (en principe prédéterminé), choisi suffisamment long pour que, en présence d'une collision, toutes les stations concernées puissent en avoir connaissance.

Bien qu'elles se déroulent sur le même canal, il doit être clair que la phase d'émission/réception rapide (le "peigne") et la phase d'émission des données sont entièrement distinctes: le peigne ne fait pas partie des données émises.

On peut prévoir ensuite d'autres étapes 522 à 540 pour compléter la constatation d'un état de collision et/ou signaler cet état de collision aux autres postes, comme décrit précédemment.

Dans la mesure où chaque poste interrompt son peigne d'émission/réception dès qu'il a reconnu lui-même l'existence d'une collision, la fin anticipée du peigne (ou le passage à une émission permanente, sans alternance d'émission/réception) peut être considérée par tous les postes comme représentative d'un état de collision.

Dans tous les cas, pour un poste qui est sur le moment en émission, la décision finale est :
- si une collision est détectée (ou signalée), ce poste renonce à transmettre son paquet (544) ou le reste éventuel de celui-ci ; l'émission est interrompue, éventuellement après insertion d'une séquence munie d'une erreur de parité, sur commande spéciale adressée au bloc CC, comme figuré à l'étape 542; le poste peut passer en réception.
- dans le cas contraire, où aucune collision n'a été signalée, le poste transmet (545) son paquet ou le reste de celui-ci juste après la fin de l'étape décrite précédemment, par l'étage RRE.

On remarquera que ce processus constitue un évitement de collision (lorsque le peigne est émis en tête de paquet), car il admet un "gagnant" dans chaque collision: celui qui se trouve avoir le mot gc le plus grand (en écriture numérique binaire avec les poids les plus forts à gauche).

Les postes qui sont en réception ont d'abord attendu (étape 550), pour laisser commencer la phase de recherche de collision, conduite par le ou les émetteurs du moment.

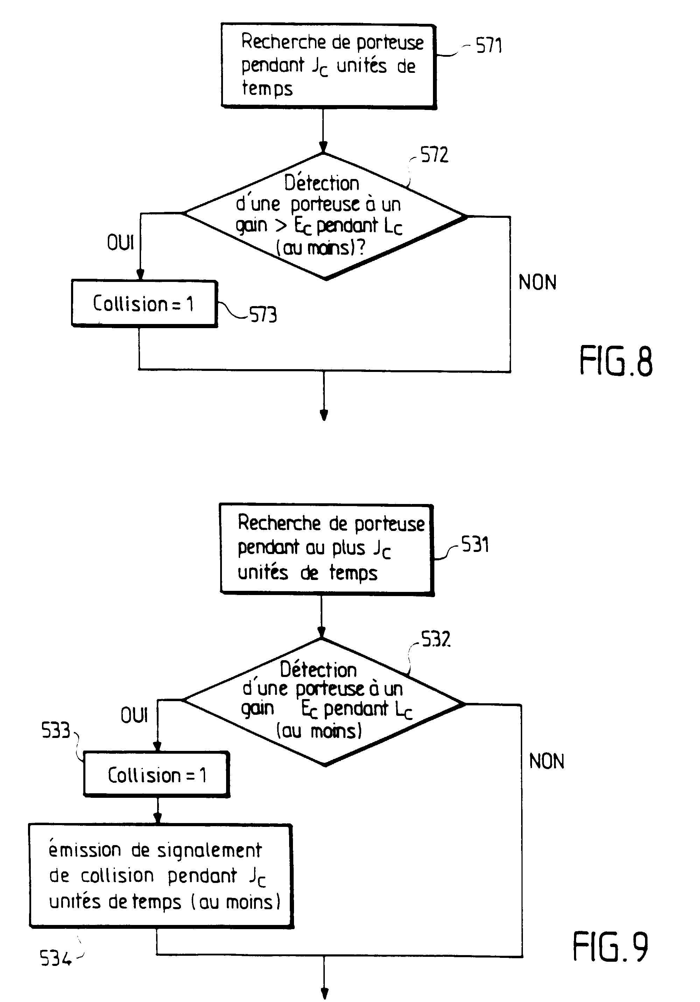

Ces postes sur le moment en réception procèdent ensuite à une détection ou écoute passive 570, détaillée sur la figure 8: la sous-étape 571 consiste à écouter pendant J_{c} unités de temps ; la sous-étape 572 recherche une porteuse pure possédant un gain supérieur à E_{c}, pendant une durée substantielle, au moins égale à L_{c} (ou un autre signal de caractéristiques particulières déterminées, aux plans fréquentiel et temporel); si une telle porteuse est détectée pendant le temps ainsi défini, la sous-étape 573 valide une variable de collision COLL22 à 1.

Ils peuvent ainsi détecter (580) si une erreur représentative d'une collision est intervenue en réception (éventuellement le signaler). Même si la réception est apparemment bonne, le paquet reçu fait l'objet d'un contrôle (590), notamment de parité.

Un exemple du contrôle 590 sera maintenant décrit en référence à la figure 7. Au départ, la sous-étape 591 établit une condition collision fausse (COLL12 = 0). A la sous-étape 592, le bloc CC recherche une éventuelle erreur de parité (ou autre) dans la trame arrivante, et ce pendant une durée fixée. A la sous-étape 593, on fait passer le signal COLL12 à 1 si une telle erreur est détectée.

Au niveau des émetteurs du moment, plusieurs variantes sont envisageables.

Le plus simple est qu'ils passent aux étapes 544 et 545 dès toute détection de collision.

Ils peuvent aussi procéder à une écoute passive selon l'étape 570 (Figure 8), comme les postes qui sont en réception. On peut préférer l'écoute active (530; Figure 9), qui ajoute à l'écoute passive un "signalement de collision", lorsqu'une collision est reconnue (notamment sur écoute). Les étapes 531 à 533 de la figure 9 sont identiques aux étapes 571 à 573 de la figure 8. Mais, lorsqu'une collision (COLL11 = 1) a été reconnue dans un poste qui, sur le moment, est en émission, on peut encore passer par l'étape 522, afin de signaler cette collision aux autres postes. Ce "signalement de collision" peut s'effectuer par tous moyens, y compris le cas où l'on modifierait une émission, en sa porteuse ou toute modulation de celle-ci, et même le cas où l'on arrête l'émission. Il est à noter que de nombreuses inversions de ce genre sont envisageables.

La collision n'intervient pas toujours en début de paquet. Une erreur peut en effet être trouvée en cours de paquet ("collision tardive"). En ce cas, des critères prédéfinis déterminent si l'on signale ou non une collision: en simplifiant on peut décider a priori de toujours signaler une collision tardive, ou au contraire de ne jamais la signaler. Le signalement peut se faire de différentes manières, et sa durée peut varier. Par ailleurs, si le paquet est décomposable en plusieurs segments jalonnés de bits de parité, il peut être déclaré partiellement bon (partiellement bien transmis).

Ce qui a été décrit en référence à la figure 6 concerne la première étape du fonctionnement de l'automate détecteur de collisions, étape qui peut se faire soit dans un état actif, soit dans un état passif, suivant le résultat du test 501 de la figure 5.

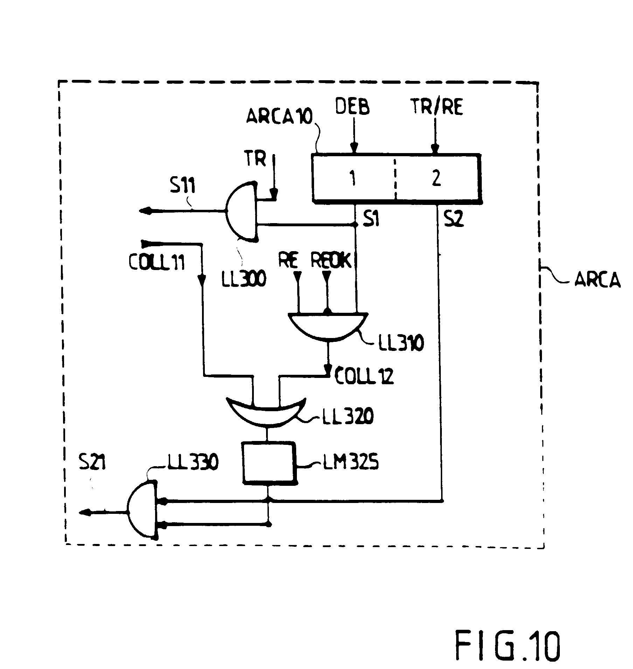

il est maintenant fait référence à la figure 10, qui illustre en détail une partie (ARCA) du bloc ARC de la figure 3.

Un séquenceur ARCA10 définit des étapes 1 et 2, en fonction par exemple d'un signal logique de début DEB et d'un signal logique TR/RE indiquant s'il s'agit d'une émission ou d'une réception.

En découlent des signaux logiques si et S2 représentatifs respectivement des premières et secondes étapes de l'automate détecteur de collisions. Si l'on est en émission (TR), une porte logique LL300 met à vrai un signal S11 (première étape, état actif). Ce signal S11 pilote les circuits de la figure 6A déjà décrits. Ceux-ci peuvent fournir en retour un signal de collision COLL11, détectée sur une émission locale.

Si on est en réception, c'est une porte ET LL310 qui intervient. Elle possède une entrée recevant le signal RE représentatif de réception, une entrée recevant le signal S1 et une troisième entrée recevant, complémenté, le signal REOK. Une réception d'une trame incorrecte va établir un signal logique de collision détectée COLL12, représentatif d'une collision en réception, imputable à des postes autres.

Une porte ET LL320 réunit les signaux COLL11 et COLL12 en un signal COLL1, mémorisé dans une mémoire LM325 (détection locale de collision).

Si aucune collision n'est mémorisée en COLL1, une porte LL30 réunit les signaux COLL1 et S2 pour permettre, dans la seconde étape, l'état d'émission/réception de données, par le signal logique S21.

Diverses modifications peuvent être apportées au schéma de la figure 5.

En réception, après la phase 590, et si une erreur a été détectée en réception, on peut signaler cette erreur (potentiellement une collision), et, réciproquement, détecter un tel signalement en provenance d'un tiers (ce qui s'applique aussi aux émetteurs).

Dans ce qui précède, on a supposé que le peigne est émis devant le paquet.

En variante, ou en complément, on peut fractionner l'émission d'un paquet de données en deux temps (ou plus), et placer l'émission/réception rapide du peigne entre ces deux fractions d'émissions du paquet (ou même à la fin du paquet). Dans ce cas, l'émission du peigne va en principe jusqu'à son terme: l'étape 518 de la figure 6 est restreinte au test que i=Nc, sans tenir compte d'une collision éventuellement détectée; toutefois, après détection d'une collision, le peigne peut se changer en une émission permanente, au lieu de poursuivre l'alternance d'émission/réception.

Il s'agit ici d'une recherche de collision. Si une collision est détectée, et que des données du paquet ont été déjà transmises, leur transmission peut être invalidée. Il est souhaitable que la collision soit signalée à la fin du peigne, de sorte que les stations en collision puissent s'abstenir d'émettre le reste de leur paquet.

En présence d'une collision reconnue, si des données du message ont été déjà transmises, leur transmission peut être invalidée. On s'abstient, s'il y a lieu, de transmettre le reste du paquet. Une procédure de traitement de collision est éventuellement entreprise, notamment si une résolution de collision est nécessaire.

En l'absence de collision reconnue, l'émission d'une partie au moins du reste éventuel du paquet peut être réalisée dans ladite bande de fréquences choisie.

La résolution de collision peut s'effectuer de différentes manières, tenant compte notamment de la façon dont la collision a été détectée.

Dans le cas d'une émission du peigne "devant le paquet", il peut suffire de laisser le gagnant émettre, tandis que les autres attendent la fin de cette émission, après quoi ils tenteront une nouvelle émission.

Dans le cas d'une émission du peigne "en cours de paquet" ou "en fin de paquet", la résolution de collision peut s'effectuer comme décrit dans la demande de brevet français FR 92 04 032 (Il en est de même pour l'émission de paquets formant messages artificiels).

Les collisions détectées en cours de réception du paquet peuvent être résolues par tout moyen approprié, comme ceux actuellement connus (dont FR-A-2 689 713).

L'invention peut être modifiée de différentes manières.

L'invention n'exclut pas un multiplexage "en fréquence", et/ou dans le temps, y compris dans le corps d'un paquet de données (ce qui nécessite l'interruption de la transmission du paquet de données en cours, et sa reprise éventuelle après insertion de données "multiplexées dans le temps"). Toute émission distincte est utilisable.

Par exemple, on peut supposer que le canal des données est déjà multiplexé en fréquences, et que l'émission de chaque paquet occupe une partie ou la totalité des sous-canaux. On peut alors envisager l'installation suivante. Avant chaque transmission de paquet, on place un en-tête sur un ou plusieurs sous-canaux, qui leur demande d'agir chacun d'une manière spécifiée à l'avance. Chacun de ces sous-canaux est utilisé pour un court laps de temps pour transmettre un motif particulier d'émission/réception, comme prévu plus haut. Lorsqu'une collision est détectée par la détection d'un signal lors d'une phase d'écoute sur l'un au moins des sous-canaux utilisés, la collision est signalée, sur un ou plusieurs sous-canaux du canal des données, ou d'une autre manière.

## Revendications

1. Procédé de transmission de données, selon lequel :
- on prévoit au moins deux postes de traitement de données (Pa, Pb), munis chacun d'une interface-réseau (Ia, Ib), capable de coopérer par radio dans une bande de fréquences choisie, ou canal de données, pour émettre des messages sur requête, et pour recueillir des messages reçus, ainsi que d'établir des ordres confirmatifs d'émission ou de réception,
caractérisé en ce qu'en réponse à un ordre confirmatif d'émission d'un message dans un poste, il est effectué dans ladite bande de fréquences une émission/réception rapidement alternée (R1), selon un **peigne d'émission/réception** choisi **pour être en principe** propre à ce poste, **la phase d'émission de cette émission/réception rapidement alternée étant effectuée sous forme d'un message non représentatif de données**, une collision étant reconnue si un signal de niveau supérieur à un premier seuil de niveau est reçu pendant une partie substantielle d'au moins **une période de réception** de cette émission/réception rapide alternée, manifestant l'émission concomitante d'un autre poste, après quoi, en présence d'une collision reconnue, une procédure de traitement de collision peut être entreprise.

2. Procédé selon la revendication 1, caractérisé en ce que la collision est signalée par un changement de l'état d'émission/réception.

3. Procédé selon l'une des revendications 1 et 2, caractérisé en ce que l'émission/réception rapide est interrompue dès la reconnaissance d'une collision.

4. Procédé selon l'une des revendications 1 à 3, caractérisé en ce qu'en outre, une collision en réception est reconnue par violation d'un critère prédéfini.

5. Procédé selon l'une des revendications 1 à 4, caractérisé en ce que le canal d'émission/réception est multiplexé en fréquence.

6. Procédé selon l'une des revendications 1 à 5, caractérisé en ce que le canal d'émission/réception est multiplexé en temps.

7. Installation de transmission de données, du type comprenant au moins deux postes de traitement de données (Pa, Pb), munis chacun d'une interface-réseau (Ia, Ib), capable de transmettre des messages sur requête, et de recueillir des messages reçus, d'un moyen détecteur de collision, et d'un dispositif de gestion d'émission/réception (ARC), donnant des ordres confirmatifs d'émission ou de réception,
caractérisée en ce que chacun des postes comporte un dispositif d'émission-réception radio opérant dans une bande de fréquences choisie, où il est capable de commutation émission/réception rapide, et en ce que, en réponse à-un ordre confirmatif d'émission d'un message, ledit dispositif opère en émission/réception rapidement alternée (R1), selon un **peigne d'émission/réception** choisi pour être **en principe** propre à ce dispositif d'émission/réception, **la phase d'émission de cette émission/réception rapidement alternée étant effectuée sous forme d'un message non représentatif de données**, une collision étant reconnue par le moyen détecteur de collision si un signal de niveau supérieur à un premier seuil de niveau est reçu durant une partie substantielle d'au moins une période de réception de cette émission/réception rapide alternée, manifestant l'émission concomitante d'un autre poste, après quoi, en l'absence de collision reconnue, l'émission d'une partie au moins du message est réalisée dans ladite bande de fréquences choisie.

8. Installation selon la revendication 7, caractérisée en ce que le **peigne** choisi est au moins partiellement aléatoire.

9. Installation selon l'une des revendications 7 et 8, caractérisée en ce qu'en réponse à une collision détectée, l'état d'émission/réception est modifié d'une manière prédéterminée.

10. Installation selon l'une des revendications 7 à 9, caractérisée en ce que dispositif émetteur/récepteur est agencé pour interrompre l'émission/réception rapide dès la reconnaissance d'une collision.

11. Installation selon l'une des revendications 7 à 10, caractérisée en ce que l'interface-réseau est agencée (RC) pour reconnaître une collision en réception par violation d'un critère prédéfini.

12. Installation selon l'une des revendications 7 à 11, caractérisée en ce que le dispositif de gestion d'émission/réception (ARC) comprend un automate (ARCA) formant moyen détecteur de collision, cet automate possédant une première étape, où il est mis à l'état actif sur-un ordre confirmatif d'émission, pour commander l'émetteur/récepteur en émission/réception rapidement alternée selon ledit **peigne** choisi, et une seconde étape où, en l'absence de collision, il commande l'émetteur/récepteur pour l'émission de données.

13. Installation selon l'une des revendications 7 à 12, caractérisé en ce que le dispositif d'émission-réception radio opère sur un canal d'émission/réception multiplexé en fréquence.

14. Installation selon l'une des revendications 7 à 13, caractérisé en ce que le dispositif d'émission-réception radio opère sur un canal d'émission/réception multiplexé en temps.

## Patentansprüche

1. Datenübertragungsverfahren, gemäß dem:
- man wenigstens zwei Datenverarbeitungsstationen (Pa, Pb) vorsieht, jede mit einer Netzschnittstelle (Ia, Ib) versehen, fähig durch Funk in einem gewählten Frequenzband oder Datenkanal zusammenzuarbeiten, um auf Anfrage Nachrichten zu senden und um empfangene Nachrichten zu sammeln sowie Sendungs- oder Empfangsbestätigungsbefehle zu erstellen,
**dadurch gekennzeichnet,**
dass als Reaktion auf einen Sendungsbestätigungsbefehl einer Nachricht in einer Station in dem genannten Frequenzband ein schneller Sendung/Empfangs-Wechsel (R1) stattfindet, gemäß einem Sendung/Empfangs-Kamm, so gewählt, dass er prinzipiell für diese Station charakteristisch ist, wobei die Sendephase dieses schnellen Sendung/Empfangs-Wechsels in Form einer nicht repräsentativen Datennachricht erfolgt und eine Kollision erkannt wird, wenn während eines wesentlichen Teils von wenigstens einer Empfangsperiode dieses schnellen Sendung/Empfangs-Wechsels ein Signal mit einem höheren Pegel als eine erste Pegelschwelle empfangen wird, das die konkomitierende Sendung einer anderen Station kundtut, woraufhin bei Vorhandensein einer erkannten Kollision ein Kollisionsverarbeitungsverfahren durchgeführt werden kann.

2. Verfahren nach Anspruch 1, dadurch gekennzeichnet, dass die Kollision durch einen Wechsel des Sende-/Empfangszustands signalisiert wird.

3. Verfahren nach einem der Ansprüche 1 und 2, dadurch gekennzeichnet, dass der schnelle Sendung/Empfangs-Wechsel bei der Erkennung einer Kollision unterbrochen wird.

4. Verfahren nach einem der Ansprüche 1 bis 3, dadurch gekennzeichnet, dass außerdem eine Empfangskollision durch Verletzung eines festgelegten Kriteriums erkannt wird.

5. Verfahren nach einem der Ansprüche 1 bis 4, dadurch gekennzeichnet, dass der Sende-/Empfangskanal im Frequenzmultiplex-Betrieb arbeitet.

6. Verfahren nach einem der Ansprüche 1 bis 5, dadurch gekennzeichnet, dass der Sende-/Empfangskanal im Zeitmultiplex-Betrieb arbeitet.

7. Datenübertragungseinrichtung des Typs mit wenigstens zwei Datenverarbeitungsstationen (Pa, Pb), jede eine Netzschnittstelle (Ia, Ib) umfassend, fähig auf Anfrage Nachrichten zu übertragen und empfangene Nachrichten zu sammeln, sowie eine Kollisionsdetektionseinrichtung und eine Sendung/Empfangs-Verwaltungseinrichtung (ARC), die Sendungs- oder Empfangsbestätigungsbefehle gibt,
**dadurch gekennzeichnet,**
dass jede Station eine Sende-Empfangs-Funkvorrichtung umfasst, die in einem gewählten Frequenzband arbeitet, wo eine schnelle Sendung/Empfangs-Umschaltung möglich ist, und dadurch, dass die genannte Vorrichtung mit einem schnellen Sendung/Empfangs-Wechsel (R1) arbeitet, gemäß einem Sendung/Empfangs-Kamm, so gewählt, dass er prinzipiell für diese Station charakteristisch ist, wobei die Sendephase dieses schnellen Sendung/Empfangs-Wechsels in Form einer nicht repräsentativen Datennachricht erfolgt und eine Kollision durch die Kollisionsdetektionseinrichtung erkannt wird, wenn während eines wesentlichen Teils von wenigstens einer Empfangsperiode dieses schnellen Sendung/Empfangs-Wechsels ein Signal mit einem höheren Pegel als eine erste Pegelschwelle empfangen wird, das die konkomitierende Sendung einer anderen Station kundtut, woraufhin bei Nichtvorhandensein einer erkannten Kollision doe Sendung wenigstens eines Teils der Nachricht in dem genannten gewählten Frequenzband durchgeführt wird.

8. Verfahren nach Anspruch 7, dadurch gekennzeichnet, dass der gewählte Kamm wenigstens partiell zufällig ist.

9. Einrichtung nach einem der Ansprüche 7 und 8, dadurch gekennzeichnet, dass sich als Reaktion auf eine detektierte Kollision der Sende-/Empfangszustand auf festgelegte Weise verändert.

10. Einrichtung nach einem der Ansprüche 7 bis 9, dadurch gekennzeichnet, dass die Sende-/Empfangsvorrichtung so eingerichtet ist, dass sie den schnellen Sendung/Empfangs-Wechsel bei Erkennung einer Kollision unterbricht.

11. Einrichtung nach einem der Ansprüche 7 bis 10, dadurch gekennzeichnet, dass die Netzschnittstelle so eingerichtet ist (RC), dass sie eine Kollision durch Verletzung eines festgelegten Kriteriums erkennt.

12. Einrichtung nach einem der Ansprüche 7 bis 11, dadurch gekennzeichnet, dass die Sendungs-/Empfangs-Verwaltungsvorrichtung (ARC) einen Automaten (ARCA) umfasst, der eine Kollisionsdetektionseinrichtung bildet, wobei dieser Automat einen ersten Schritt umfasst, in dem er durch einen Sendungsbestätigungsbefehl in den aktiven Zustand versetzt wird, um den schnellen Sendung/Empfangs-Wechsel des Sender/Empfängers gemäß dem genannten gewählten Kamm zu steuern, und einen zweiten Schritt umfasst, in dem er bei Nichtvorhandensein einer Kollision dem Sender/Empfänger die Sendung der Daten befiehlt.

13. Einrichtung nach einem der Ansprüche 7 bis 12, dadurch gekennzeichnet, dass die Sende-Empfangs-Funkvorrichtung auf einem Sende-/Empfangskanal mit Frequenzmultiplex-Betrieb arbeitet.

14. Einrichtung nach einem der Ansprüche 7 bis 13, dadurch gekennzeichnet, dass die Sende-Empfangs-Funkvorrichtung auf einem Sende-/Empfangskanal mit Zeitmultiplex-Betrieb arbeitet.

## Claims

1. Data transmission method, according to which:
- at least two data processing stations (Pa, Pb) are envisaged, each provided with a network interface (Ia, Ib), which is capable of co-operating by radio in a chosen frequency band, or data channel, so as to transmit messages on request, and to gather messages received, as well as to compile orders confirming transmission or reception,
characterized in that in response to an order confirming transmission of a message in a station, a rapidly alternating transmission/reception (R1) is performed in the said frequency band, according to a **transmission/reception comb** chosen **to be in principle** specific to this station, **the phase of transmission of this rapidly alternating transmission/reception being performed in the form of a message which is not representative of data**, a collision being recognized if a signal of level greater than a first threshold level is received during a substantial part of at least **one reception period** of this rapidly alternating transmission/reception, evincing concomitant transmission from another station, after which, in the presence of a recognized collision, a collision-processing procedure can be undertaken.

2. Method according to Claim 1, characterized in that the collision is signalled by a change of the transmission/reception state.

3. Method according to either of Claims 1 and 2, characterized in that the rapid transmission/reception is interrupted as soon as a collision is recognized.

4. Method according to one of Claims 1 to 3, characterized in that, furthermore, a collision in reception is recognized by violation of a predefined criterion.

5. Method according to one of Claims 1 to 4, characterized in that the transmission/reception channel is frequency-multiplexed.

6. Method according to one of Claims 1 to 5, characterized in that the transmission/reception channel is time-multiplexed.

7. Data transmission installation, of the type comprising at least two data processing stations (Pa, Pb), each provided with a network interface (Ia, Ib), which is capable of transmitting messages on request, and of gathering messages received, with a collision detector means, and with a transmission/reception management device (ARC), issuing orders confirming transmission or reception,
characterized in that each of the stations includes a radio transceiver device operating in a chosen frequency band, where it is capable of rapid transmission/reception switching, and in that, in response to an order confirming transmission of a message, the said device operates in rapidly alternating transmission/reception mode (R1), according to a **transmission/reception comb** chosen to be i**n principle** specific to this transmission/reception device, **the phase of transmission of this rapidly alternating transmission/reception being performed in the form of a message which is not representative of data**, a collision being recognized by the collision detector means if a signal of level greater than a first threshold level is received during a substantial part of at least **one reception period** of this rapidly alternating transmission/reception, evincing concomitant transmission from another station, after which, in the absence of recognized collision, the transmission of a part at least of the message is carried out in the said chosen frequency band.

8. Installation according to Claim 7, characterized in that the chosen **comb** is at least partially random.

9. Installation according to either of Claims 7 and 8, characterized in that in response to a detected collision, the transmission/reception state is modified in a predetermined manner.

10. Installation according to one of Claims 7 to 9, characterized in that the transceiver device is devised so as to interrupt the rapid transmission/reception as soon as a collision is recognized.

11. Installation according to one of Claims 7 to 10, characterized in that the network interface is devised (RC) so as to recognize a collision in reception by violation of a predefined criterion.

12. Installation according to one of Claims 7 to 11, characterized in that the transmission/reception management device (ARC) comprises an automatic handler (ARCA) forming a collision detector means, this automatic handler possessing a first step, in which it is placed in the active state upon an order confirming transmission, so as to control the transmitter/receiver in rapidly alternating transmission/reception mode according to the said chosen **comb**, and a second step in which, in the absence of collision, it controls the transmitter/receiver in respect of the transmission of data.

13. Installation according to one of Claims 7 to 12, characterized in that the radio transceiver device operates on a frequency-multiplexed transmission/ reception channel.

14. Installation according to one of Claims 7 to 13, characterized in that the radio transceiver device operates on a time-multiplexed transmission/reception channel.
